# FASCICULE DE BREVET EUROPEEN

(11) **EP 3 362 685 B1**
(45) Date de publication et mention de la délivrance du brevet: **04.12.2019**
(21) Numéro de dépôt: 16784155.0
(22) Date de dépôt: 13.10.2016
(51) Int. Cl.: F04B 5/02, F04B 7/00, F04B 13/02, F04B 15/04, F04B 19/22, F04B 53/10, F04B 53/12, F04B 53/14

(54) **MACHINE HYDRAULIQUE ET POMPE DOSEUSE REVERSIBLE EQUIPEE D'UNE TELLE MACHINE**
HYDRAULISCHE MASCHINE UND MIT SOLCH EINER MASCHINE AUSGESTATTETE REVERSIBLE DOSIERPUMPE
HYDRAULIC MACHINE AND REVERSIBLE METERING PUMP EQUIPPED WITH SUCH A MACHINE

(30) Priorité: 13.10.2015 FR 1559731
(43) Date de publication de la demande: 22.08.2018
(73) Titulaire: Dosatron International, 33370 Tresses (FR)
(72) Inventeur: FURET, Sébastien, 33800 Bordeaux (FR); LAMBINET, Sandrine, 33670 Sadirac (FR); VACHER, David, 33360 Latresne (FR); LAATIAOUI, Najib, 33130 Begles (FR)
(74) Mandataire: IPAZ
(86) Numéro de dépôt international: PCT/EP2016/074611
(87) Numéro de publication internationale: WO 2017/064197

(56) Documents cités:
- EP-B1- 0 255 791
- EP-B1- 1 151 196
- FR-A1- 2 896 280
- US-A- 5 505 224

## Description

L'invention a pour objet une machine hydraulique du type comportant une enveloppe, un piston différentiel présentant une zone à grande section et une zone à plus petite section, propre à coulisser en mouvement alternatif respectivement dans l'enveloppe et dans un logement cylindrique intérieur à l'enveloppe. Le piston compartimente l'espace intérieur à l'enveloppe suivant au moins deux chambres. La machine comprend des moyens de commutation hydraulique pour l'alimentation et l'évacuation en liquide des chambres séparées par le piston, ces moyens de commutation étant commandés par les déplacements du piston et pouvant prendre deux positions stables. La machine comprend aussi des moyens de déclenchement propres à provoquer, en fin de course du piston, un changement brusque de la position des moyens de commutation, sous l'action d'un moyen élastique, pour l'inversion de la course. L'invention a également pour objet une pompe doseuse réversible comportant une telle machine hydraulique.

Une machine hydraulique de ce type est connue, par exemple des documents EP 0 255 791 B, US 5 505 224 A ou EP 1 151 196 A. Cette machine hydraulique peut servir à entraîner un dispositif d'aspiration d'un additif dans un liquide principal, qui, lui, assure l'entraînement de la machine.

Toutefois, pour ce type de machines hydrauliques, il est connu de ménager une entrée et une sortie, chacune bien définies, de sorte que, généralement, le mélange entre l'additif et le liquide principal a lieu dans une chambre dite « de mélange », juste avant que ledit mélange ne soit évacué vers la sortie. Cette configuration est en effet privilégiée, puisqu'elle évite que le mélange ne traverse toute l'enveloppe, cette traversée pouvant occasionner, si l'additif est agressif ou bien encrassant, la corrosion et/ou l'encrassement des pièces intérieures à l'enveloppe. Toutefois, dans le cas où l'additif ne présente pas de caractéristiques corrosive et/ou encrassant, ou bien dans le cas où les pièces de la pompe ne sont pas sensibles à l'additif, il peut être souhaitable, qu'à l'issue du mélange dans la chambre dédiée, le mélange circule dans la chambre supérieure puis dans la chambre inférieure avant de gagner la sortie. Cette configuration permet en effet un meilleur mélange entre l'additif et le liquide principal.

C'est pourquoi, il est nécessaire de pouvoir utiliser cette machine hydraulique de manière à ce que l'arrivée du liquide principal soit interchangeable avec la sortie du liquide mélangé à l'additif. De cette façon, le mélange entre l'additif et le liquide principal s'effectue toujours dans la chambre de mélange mais est évacué hors de la pompe, soit immédiatement après le mélange sans traverser tout l'intérieur de la machine hydraulique, soit après avoir traversé tout l'intérieur de la machine.

A cet effet, l'invention a pour objet une machine hydraulique, comprenant :
- une enveloppe s'étendant longitudinalement suivant un axe, et renfermant un logement cylindrique coaxial à l'enveloppe,
- un piston différentiel présentant une couronne supérieure ainsi qu'une base inférieure de plus petite section, propres à coulisser chacune en mouvement alternatif respectivement dans l'enveloppe et dans le logement cylindrique, le piston et le logement cylindrique compartimentant l'intérieur de l'enveloppe suivant une chambres de mélange délimitée par le logement cylindrique et la base inférieure du piston, une chambre dite « supérieure » délimitée par la couronne supérieure et le couvercle de l'enveloppe, et une chambre dite « inférieure » délimitée par la partie en deçà de la couronne supérieure, par l'enveloppe et par le logement cylindrique,
- des moyens de commutation hydraulique pour l'alimentation et l'évacuation des chambres séparées par le piston, ces moyens de commutation étant commandés par les déplacements du piston et comportent au moins une bielle agissant sur un organe de distribution pouvant prendre deux positions stables, ledit organe de distribution comportant au moins un clapet supérieur coopérant avec un premier siège pratiqué dans la couronne supérieure du piston pour permettre la communication entre la chambre supérieure et la chambre inférieure et au moins un clapet inférieur coopérant avec un second siège pratiqué dans la base inférieure du piston pour permettre la communication entre la chambre supérieure et la chambre de mélange,
- des moyens de déclenchement comprenant un poussoir propre à provoquer, en fin de course du piston, un changement brusque de la position des moyens de commutation, sous l'action d'un moyen élastique, pour l'inversion de la course, caractérisée en ce que les sièges de clapet inférieur et supérieur admettent respectivement une portion tronconique supérieure et une portion tronconique inférieure de conicité opposée et s'ouvrant chacune dans l'une des chambres en communication, de sorte que la communication entre les chambres est coupée lorsque le clapet associé obture l'une ou l'autre des portions tronconiques supérieure ou inférieure.

Des caractéristiques optionnelles de l'invention, complémentaires ou de substitution sont énoncées ci-après.

Selon certaines caractéristiques, le piston est muni au niveau de sa couronne supérieure et de sa base inférieure de moyens d'étanchéité démontables.

Selon d'autres caractéristiques, au moins l'un des moyens d'étanchéité de la couronne supérieure et de la base inférieure comprend une lèvre et un adaptateur respectivement montés et fixés sur la surface circonférentielle de la couronne et/ou de la base, la lèvre étant bloquée en translation entre un épaulement ménagé sur la surface circonférentielle de la couronne supérieure ou de la base inférieure, et l'adaptateur.

Selon d'autres caractéristiques encore, la fixation de l'adaptateur comprend un assemblage du type à baïonnette faisant coopérer des saillies radiales ménagées sur la surface circonférentielle intérieure de l'adaptateur avec des rainures périphériques correspondantes ménagées sur la surface circonférentielle extérieure de la couronne supérieure du piston, respectivement de la base du piston.

Selon d'autres caractéristiques encore, la fixation de l'adaptateur comprend en outre un verrouillage faisant coopérer une languette s'étendant suivant la largeur d'une fenêtre pratiquée dans l'épaisseur de la couronne supérieure du piston, respectivement de la base inférieure, avec un ergot s'étendant radialement depuis la surface circonférentielle intérieure de l'adaptateur, de sorte que lors de l'assemblage de type baïonnette, l'ergot translate le long de la languette en occasionnant son fléchissement jusqu'à s'encastrer entre le bord de la fenêtre et l'extrémité de la languette libérée de l'appui de l'ergot.

Selon d'autres caractéristiques encore, la lèvre a une forme tronconique, et préférentiellement une section en forme de V.

Selon d'autres caractéristiques encore, le piston est moulé d'une seule pièce.

Selon d'autres caractéristiques encore, le piston est surmoulé sur une accroche d'un dispositif d'aspiration.

L'invention a également pour objet une pompe doseuse réversible comprenant une machine hydraulique conforme à un mode de réalisation de l'invention, la pompe étant dotée en outre d'un dispositif d'aspiration, d'une première tubulure débouchant dans la chambre inférieure, d'une seconde tubulure et d'un manchon débouchant chacun dans la chambre de mélange, le manchon étant raccordé en l'autre de ses extrémités au dispositif d'aspiration.

Selon certaines caractéristiques, la pompe doseuse réversible est telle que le clapet supérieur est situé dans la chambre inférieure tandis que le clapet inférieur est situé dans la chambre supérieure, la base inférieure et la couronne supérieure étant équipées chacune de lèvres d'étanchéité tronconiques, la conicité de la lèvre entourant la couronne supérieure étant tournée vers le couvercle tandis que la conicité de la lèvre entourant la base inférieure est tournée vers le dispositif d'aspiration.

Selon d'autres caractéristiques, le clapet supérieur est situé dans la chambre supérieure tandis que le clapet inférieur est situé dans la chambre de mélange, la base inférieure et la couronne supérieure étant équipées de lèvres d'étanchéité tronconiques, la conicité de la lèvre entourant la couronne supérieure étant tournée vers le dispositif d'aspiration tandis que la conicité de la lèvre entourant la base inférieure est tournée vers le couvercle.

D'autres avantages et particularités de l'invention apparaîtront à la lecture de la description détaillée des mises en œuvre et des modes de réalisation nullement limitatifs, et des dessins annexés suivants :
la FIGURE la est une représentation schématique d'une machine hydraulique suivant un premier mode de fonctionnement de l'invention,
la FIGURE 1b est une représentation schématique d'une machine hydraulique suivant un second mode de fonctionnement de l'invention,
la FIGURE 2 est une coupe longitudinale en perspective d'une machine hydraulique d'un mode de réalisation de l'invention,
la FIGURE 3 est une vue de face d'une coupe longitudinale d'une machine hydraulique conforme au premier mode de fonctionnement de l'invention,
la FIGURE 4 est une coupe longitudinale éclatée d'une machine hydraulique conforme au second mode de fonctionnement de l'invention,
la FIGURE 5 est une vue de face d'une coupe longitudinale d'une machine hydraulique conforme au second mode de fonctionnement de l'invention,
la FIGURE 6 est une coupe longitudinale éclatée d'une machine hydraulique conforme au premier mode de fonctionnement de l'invention,
les FIGURES 7a, 7a', 7b, 7b', 7c, 7d sont des représentations en perspective d'un détail d'une machine hydraulique conforme à l'invention.
les FIGURES 8a, 8a', 8b, 8b', 8c, 8d sont des représentations en perspective d'un autre détail d'une machine hydraulique conforme à l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

A des fins de concision et de clarté, les éléments portent les mêmes références sur les différentes figures.

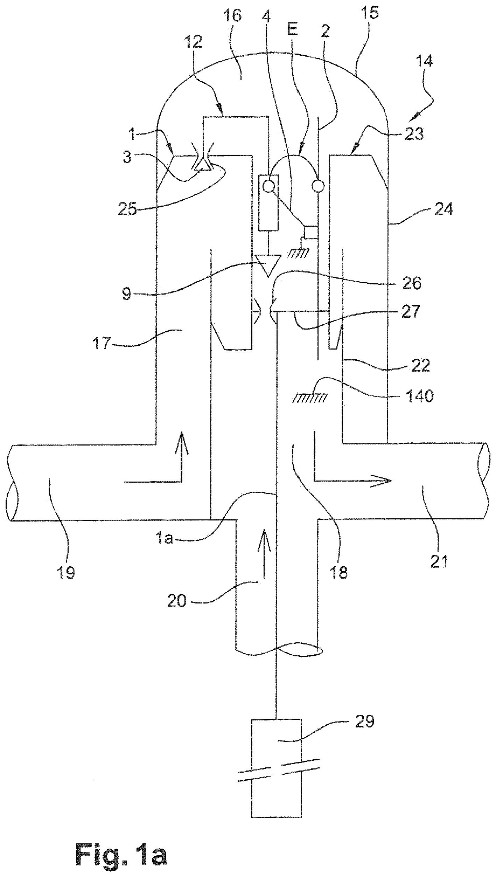

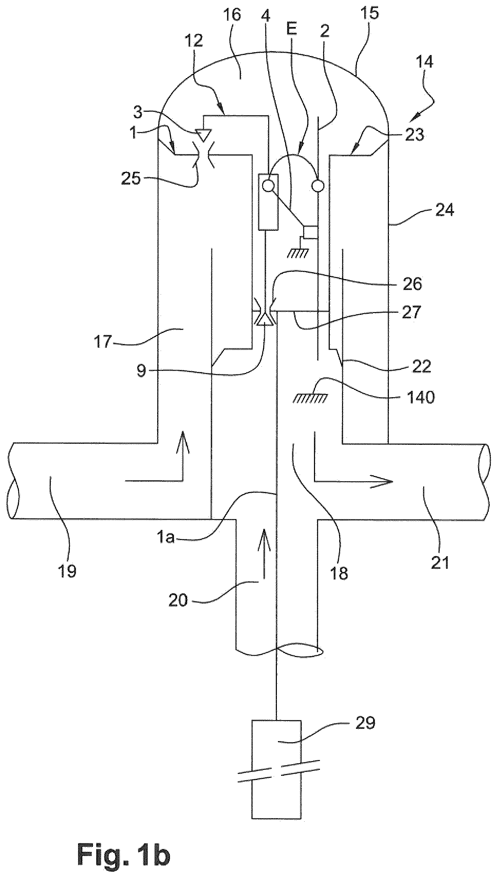

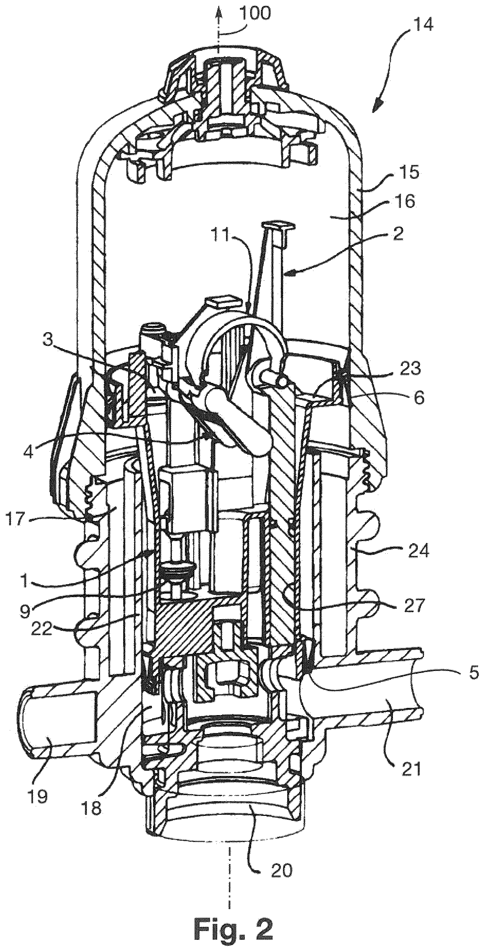

En se reportant aux dessins, notamment aux figures 1 et 2, on peut voir une machine hydraulique comprenant un piston hydraulique différentiel à mouvement alternatif. La machine comprend une enveloppe 14 constituée d'un corps cylindrique 24 s'étendant suivant un axe 100 et surmonté d'un couvercle 15 assemblé au corps 24 de manière démontable, notamment par vissage. Un piston différentiel 1 est disposé dans l'enveloppe 14 pour coulisser en mouvement alternatif suivant l'axe 100. Le piston 1 comporte, en partie haute, une couronne supérieure 23 de grande section, dont la périphérie est en appui de manière étanche contre la paroi interne de l'enveloppe 14 grâce à une pièce d'étanchéité. Le fût du piston, coaxial à l'enveloppe 14 et de plus petit diamètre que la couronne supérieure 23 est solidaire de cette couronne et s'étend vers le bas (i.e. la direction opposée au couvercle). La partie inférieure du fût du piston coulisse de manière étanche dans un logement cylindrique 22 coaxial à l'enveloppe 1. Le fût est fermé en partie basse par une base inférieure 27. Le piston 1 et le logement cylindrique 22 compartimentent l'intérieur de l'enveloppe 14 suivant une chambre dite « de mélange » 18 délimitée par le logement cylindrique 22 et la base inférieure du piston 27, une chambre dite «supérieure» 16 délimitée par la couronne supérieure 23 et le couvercle 15 de l'enveloppe, et une chambre dite «inférieure» 17, de forme sensiblement annulaire, délimitée par la partie en deçà de la couronne supérieure 23, par l'enveloppe 14 et par le logement cylindrique 22.

La machine hydraulique comprend une première tubulure 19 reliant la chambre inférieure 17 à l'extérieur, et une seconde tubulure 21 reliant la chambre de mélange 18 à l'extérieur. Un manchon cylindrique 20 coaxial à l'enveloppe 14 s'étend depuis la chambre de mélange vers le bas pour permettre le raccordement de la chambre de mélange à un dispositif d'aspiration 29. Ce dispositif d'aspiration est actionné par la machine hydraulique au moyen d'une tige la du piston, elle-même reliée à un moyen de pompage de l'additif (non représenté sur les figures). Pour plus de détails concernant ce type de dispositif, on pourra se reporter aux documents EP0255791 et EP1151196.

Des moyens de commutation hydraulique sont prévus pour l'alimentation et l'évacuation des chambres 16, 17, 18 séparées par le piston. Ces moyens de commutation sont commandés par les déplacements du piston et comportent une bielle 4 agissant sur un organe de distribution pouvant prendre deux positions stables. Plus précisément, l'organe de distribution comprend au moins un porte-clapets 12 comprenant au moins un premier clapet dit « supérieur » 3 coopérant avec un premier siège 25 pratiqué dans la couronne supérieure 23 du piston, et au moins un second clapet dit « inférieur » 9 coopérant avec un second siège 26 pratiqué dans la base inférieure 27 du piston. Le nombre de clapets peut varier, mais il est préférablement égal à quatre.

La machine hydraulique comporte en outre des moyens de déclenchement comprenant un poussoir 2 et propres à provoquer, en fin de course du piston, par venue en appui contre une butée, un changement brusque de la position des moyens de commutation sous l'action d'un moyen élastique E, pour l'inversion de la course du piston. La venue en appui contre une butée (non représentée sur les figures) s'effectue au voisinage du couvercle 15 pour permettre au piston de changer sa course ascendante en course descendante. La venue en appui contre une butée 140 s'effectue également au voisinage de la partie inférieure de l'enveloppe pour permettre au piston de changer sa course descendante en course ascendante.

La bielle 4 est articulée à une extrémité sur un point fixe par rapport au piston 1, tandis que l'autre extrémité de la bielle peut se déplacer dans une fenêtre verticale du porte-clapets 12 et venir en butée contre l'une des deux extrémités de cette fenêtre, dans l'une des deux positions stables de l'organe de distribution. Le moyen élastique E est solidaire, à chacune de ses extrémités, d'un organe d'articulation reçu respectivement dans un logement prévu sur la bielle et sur le poussoir 2. Chaque logement est ouvert suivant une direction sensiblement opposée au sens de l'effort exercé par le moyen élastique E dans la paroi du logement considéré. Ce moyen élastique E peut être avantageusement constitué par une lame ressort convexe 11.

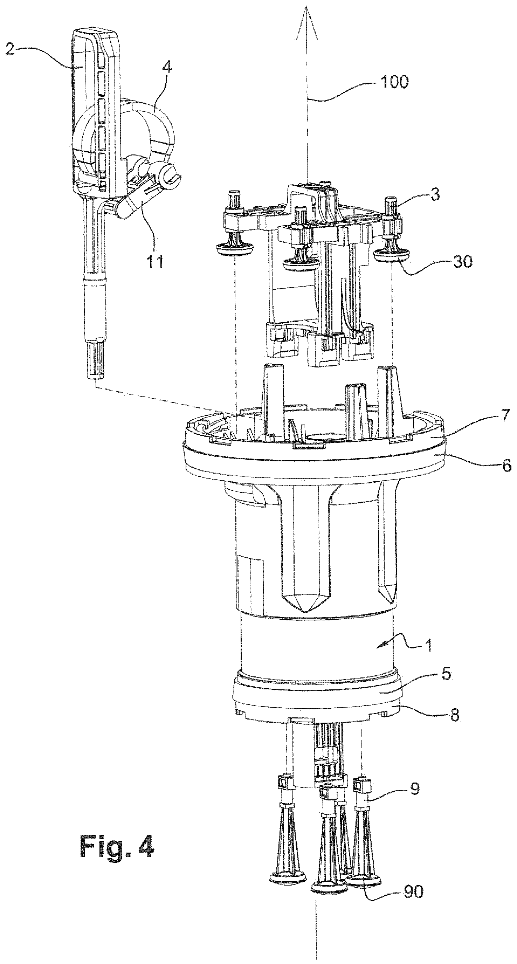

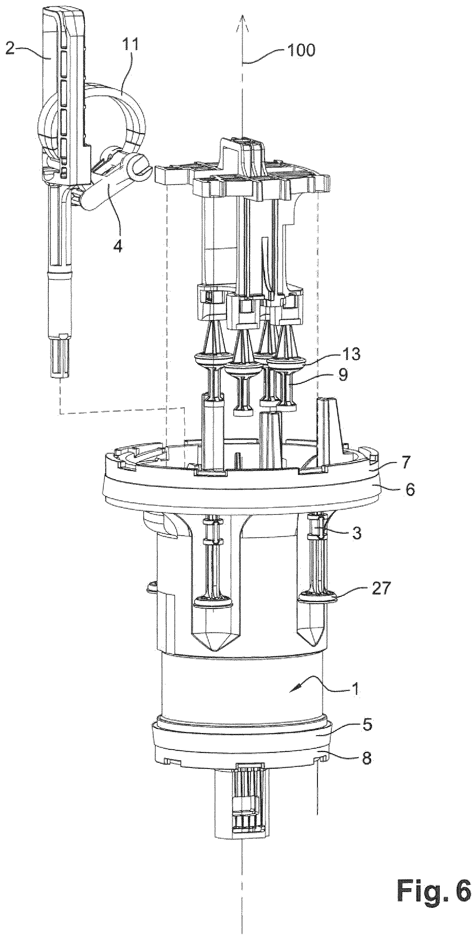

Les clapets 3, 9 sont montés sur le porte-clapets 12 ayant sensiblement la forme d'un cadre (figures 4 et 6), vertical en position de fonctionnement de la machine hydraulique, et comportant sur ses deux côtés verticaux des nervures en saillie vers l'extérieur, propres à coopérer avec des rainures de guidage (non visibles) prévues dans le piston 1. Avantageusement, il y a quatre clapets supérieurs 3 et quatre clapets inférieurs 9. Le côté horizontal inférieur du cadre comporte deux logements ouverts permettant un attelage, avec encliquetage de la tige cylindrique d'un clapet, par une translation perpendiculaire au plan du cadre. Les bords inférieurs de chaque logement sont logés, avec un certain jeu suivant une direction parallèle à l'axe du piston, entre deux collerettes ou disques solidaires de la tige du clapet. Le clapet proprement dit est constitué par un disque comportant à sa périphérie une gorge pour recevoir un joint d'étanchéité 13, 28.

Le siège 25 du clapet dit « supérieur » 3 est pratiqué au travers de la couronne supérieure 23 du piston, de sorte qu'il permet la communication entre la chambre supérieure 16 et la chambre inférieure 17. Le siège de clapet supérieur s'étend suivant un axe sensiblement parallèle à l'axe 100 de la machine hydraulique et admet une portion tronconique supérieure 25a et une portion tronconique inférieure 25c de conicité opposée et s'ouvrant chacune dans l'une des chambres en communication. Les portions tronconiques inférieure et supérieure sont reliées par une partie centrale 25b.

Le siège 26 du clapet dit « inférieur » 9 est pratiqué dans la base inférieure 27 du piston, de sorte qu'il permet la communication entre la chambre supérieure 16 et la chambre de mélange 18. Le siège de clapet inférieur s'étend suivant un axe sensiblement parallèle à l'axe 100 de la machine hydraulique et admet une portion tronconique supérieure 26a et une portion tronconique inférieure 26c de conicité opposée et s'ouvrant chacune dans l'une des chambres en communication. Les portions tronconiques inférieure et supérieure sont reliées par une partie centrale 26b. En d'autres termes, la section des portions tronconiques est maximum à l'endroit où ces portions débouchent dans leurs chambres respectives.

Lorsque le couvercle 15 est démonté, il est possible d'accéder aux tiges des clapets pour les engager ou les désengager du porte-clapets.

Le porte-clapets forme avantageusement une pièce unique qui peut être réalisée en matière plastique moulée.

Le fonctionnement de la machine hydraulique est semblable à celui décrit dans EP1151196 avec toutefois pour particularité que ce fonctionnement est réversible.

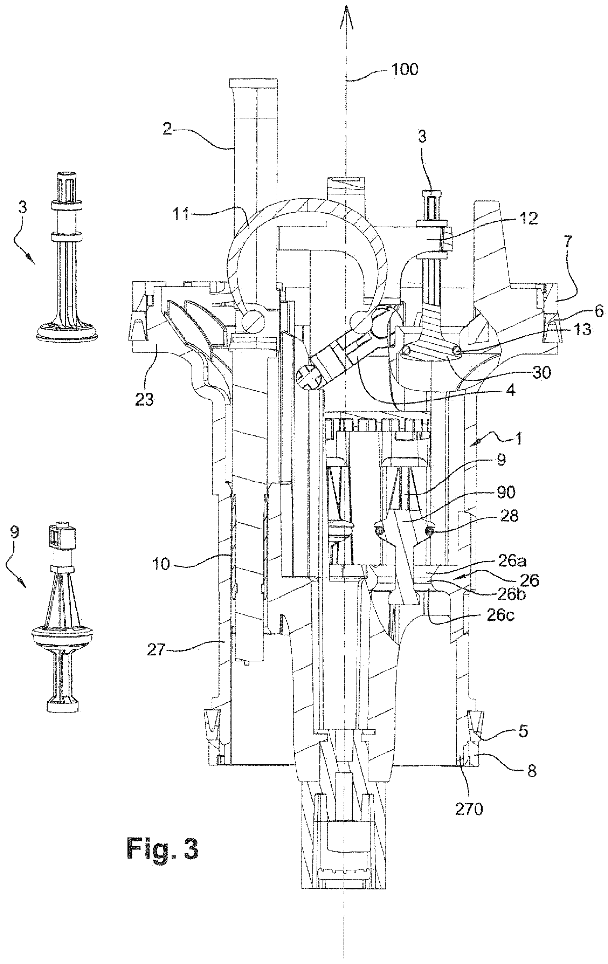

Tel que représenté dans les figures 1, 3 et 6, les clapets supérieurs 3 sont montés « traversants » dans la couronne supérieure 23 du piston de sorte que la base des clapets se situe à l'intérieur de la chambre inférieure 17. Ceci se traduit par le fait que la face de la base 30, qui se situe du côté de la tige du clapet 3, est apte à obturer la portion tronconique 25c pratiquée dans la couronne supérieure lorsque ladite face vient en appui contre la portion tronconique 25c du siège 25 des clapets supérieurs 3. Avantageusement, un joint torique 13 peut être logé dans une rainure circonférentielle pratiquée dans la base 30 des clapets supérieurs 3, afin d'optimiser l'étanchéité.

En revanche les clapets inférieurs 9 ne sont pas montés « traversants » dans la base inférieure 27 du piston 1, de sorte que la base 90 des clapets 9 se situe dans la chambre supérieure. Ceci se traduit par le fait que la face de la base 90 opposée à la face qui se situe du côté de la tige du clapet 9 est apte à obturer la portion tronconique 26a pratiquée dans la base 27 lorsque ladite face vient en appui contre la portion tronconique 26a du siège 26 des clapets inférieurs 9. Avantageusement, un joint torique 28 peut être logé dans une rainure circonférentielle pratiquée dans la base 90 des clapets inférieurs 9, afin d'optimiser l'étanchéité.

Selon cette configuration de montage des clapets, l'entrée de la machine hydraulique pour le liquide principal se situe au niveau de la première tubulure 19, et la sortie pour le mélange se situe au niveau de la seconde tubulure 21.

Suivant le cycle associé à cette configuration, le liquide principal sous pression, généralement de l'eau, entre dans la chambre inférieure 17 par la tubulure 19. Les clapets supérieurs 3 sont fermés alors que les clapets 9 sont ouverts, permettant ainsi le refoulement du liquide de la chambre supérieure 16 vers la chambre de mélange 18 puis l'évacuation du mélange vers la sortie via la tubulure 21. En effet, sous l'action de la pression du liquide principal sur la face inférieure de la couronne supérieure du piston, ce dernier entame une course ascendante, qui tend à diminuer le volume de la chambre supérieure et donc à en chasser le contenu vers la chambre de mélange, puisque la communication est ouverte.

En fin de course ascendante, le poussoir 2 vient en appui contre une butée liée au couvercle 15, ce qui provoque sous l'effet de la lame ressort 11 le basculement de la bielle 4 vers l'autre position stable basse, avec déplacement du porte-clapets 12 vers la base du piston. Les clapets 9 se ferment tandis que les clapets 3 s'ouvrent. Le liquide sous pression peut passer depuis la chambre inférieure 17 vers la chambre supérieure 16, dont la communication avec la chambre de mélange 18 est maintenant coupée, et le mouvement du piston est inversé. Ce mouvement est inversé du fait de la pression du liquide principal sur la base inférieure 27. En fin de course descendante, le poussoir 2 par son extrémité inférieure rencontre une butée 140 solidaire de l'enveloppe 14, ce qui provoque un nouveau basculement de la bielle 4 vers la position relevée et un déplacement du porte-clapets 12 entraînant la fermeture des clapets 3 et l'ouverture des clapets 9. Le mouvement du piston 1 est de nouveau inversé et le piston repart suivant une course ascendante.

Parallèlement, le mouvement alternatif du piston lors de l'alimentation de la machine hydraulique en liquide, permet de générer alternativement une aspiration à travers le manchon 20 jusque dans la chambre de mélange 18. De ce fait, lorsque le manchon 20 est raccordé à un dispositif d'aspiration 29, il se produit une aspiration de l'additif qui est injecté dans la chambre de mélange. Généralement le dispositif d'aspiration comporte au moins un clapet d'aspiration qui s'ouvre lorsque le piston s'éloigne du manchon (c'est-à-dire en course ascendante) puis une expulsion en sortie via la tubulure 21 avec fermeture du premier clapet d'aspiration lorsque le piston se rapproche du manchon (c'est-à-dire en course descendante).

Suivant la configuration décrite ci-avant, l'aspiration de l'additif est concomitante avec l'expulsion du liquide principal depuis la chambre supérieure 16 vers la chambre de mélange 18. L'expulsion en sortie de la pompe via la tubulure 21 s'effectue donc juste après que l'additif a été mélangé avec le liquide principal. Cette configuration permet d'éviter que l'additif ne traverse tout l'intérieur de la machine hydraulique. Elle permet notamment de limiter les risques d'encrassement ou bien de corrosion à l'intérieur de la machine.

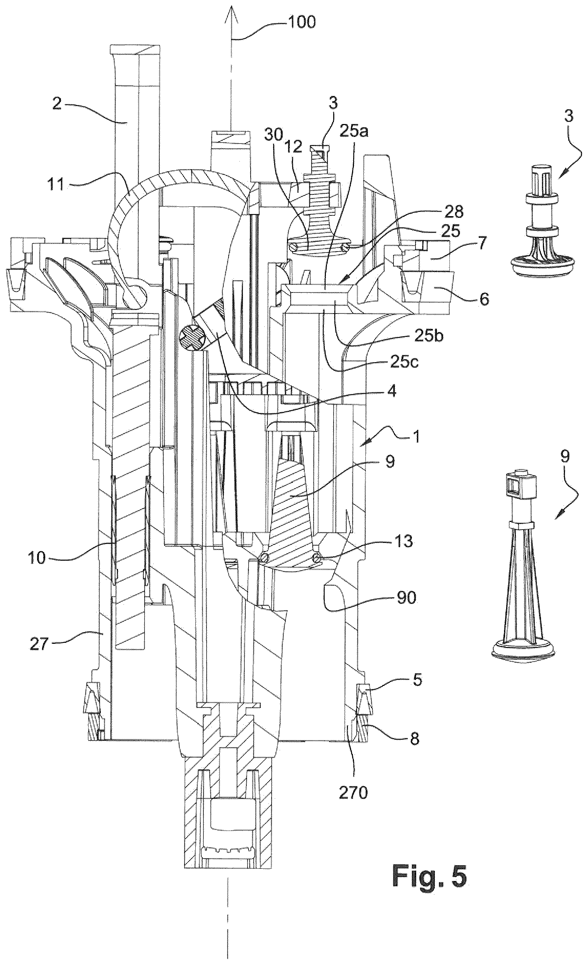

Suivant une autre configuration et tel que représenté dans les figures 4 et 5, les clapets supérieurs 3 ne sont plus montés « traversants » dans la couronne supérieure 23 du piston puisque la base 30 des clapets supérieurs 3 se situe dans cette configuration à l'intérieur de la chambre supérieure 16. Ceci se traduit par le fait que la face opposée à celle située du côté de la tige de la base 30 des clapets 3 est apte à obturer l'orifice pratiqué dans la couronne supérieure lorsque ladite face est en appui contre la portion tronconique 25a du siège 25 des clapets supérieurs 3. Avantageusement, un joint torique 13 peut être logé dans une rainure circonférentielle pratiquée dans la base des clapets supérieurs 3, afin d'optimiser l'étanchéité.

Toujours selon cette configuration, les clapets inférieurs 9 sont montés « traversants » dans la base inférieure 27 du piston 1, de sorte que la base 90 des clapets 9 se situe dans la chambre de mélange 18. Ceci se traduit par le fait que la face du côté de la tige de la base 90 du clapet 9 est apte à obturer l'orifice pratiqué dans la base 27 lorsque ladite face est en appui contre la portion tronconique 26c du siège 26 des clapets inférieurs 9. Avantageusement, un joint torique 28 peut être logé dans une rainure circonférentielle pratiquée dans la base des clapets inférieurs 9, afin d'optimiser l'étanchéité.

Selon cette configuration de montage des clapets, l'entrée de la machine hydraulique se situe au niveau de la seconde tubulure 21, et la sortie au niveau de la première tubulure 19.

Suivant le cycle associé à cette configuration, le liquide principal sous pression, généralement de l'eau, entre dans la chambre de mélange 18 par la tubulure 21. Les clapets inférieurs 9 sont fermés alors que les clapets supérieurs 3 sont ouverts, permettant le refoulement du liquide de la chambre supérieure 16 vers la chambre inférieure 17 puis l'évacuation du mélange vers la sortie via la tubulure 19. En effet, sous l'action de la pression du liquide principal contre la face inférieure de la couronne supérieure du piston, ce dernier entame une course ascendante. Le volume de la chambre supérieure diminuant, le mélange qui y est contenu s'évacue via la communication ouverte entre les chambres supérieure et inférieure (clapets supérieurs 3 relevés).

En fin de course ascendante, le poussoir 2 vient en appui contre une butée liée à au couvercle 15, ce qui provoque sous l'effet de la lame ressort 11 le basculement de la bielle 4 vers l'autre position stable, avec déplacement du porte-clapets 12 en direction de la base du piston. Les clapets 3 se ferment tandis que les clapets 9 s'ouvrent. Le mélange sous pression passe dans la chambre supérieure 16 qui ne communique plus avec la chambre inférieure 17, et le mouvement du piston est inversé puisque la pression s'exerce maintenant sur la face supérieure de la base inférieure 27. En fin de course descendante, le poussoir 2 par son extrémité inférieure rencontre une butée 140 solidaire de l'enveloppe, ce qui provoque un nouveau basculement de la bielle 4 vers la position inverse et un déplacement du porte-clapets 12 entraînant la fermeture des clapets 9 et l'ouverture des clapets 3. Le mouvement du piston 1 est de nouveau inversé et le piston repart en course ascendante.

Lors du mouvement alternatif du piston mû par l'alimentation de la machine hydraulique en liquide principal, l'aspiration à travers le manchon 20 jusque dans la chambre de mélange 18 est également générée par le mouvement alternatif du piston. De ce fait, lorsque le piston s'éloigne du manchon, l'additif est aspiré dans la chambre 18 pour se mélanger avec le liquide principal entrant via la tubulure 21. Puis, lorsque le piston se rapproche du manchon, le premier clapet d'aspiration se ferme et le mélange est expulsé vers la chambre supérieure 16.

L'expulsion en sortie de la pompe via la tubulure 19 s'effectue donc après que l'additif et le liquide principal mélangés ensembles dans la chambre 18 ont traversé la chambre supérieure et la chambre inférieure. Cette configuration garantit une qualité de mélange bien supérieure à celle obtenue avec la configuration précédente.

Avantageusement, la machine hydraulique, selon l'invention peut être réalisée entièrement en matière plastique, y compris la lame 11, de sorte qu'elle présente une meilleure résistance aux produits chimiques sans aucune pièce métallique. Le nombre de pièces constitutives de la machine et le temps d'assemblage de ces pièces, sont également considérablement réduits. Le montage et la maintenance sont simplifiés et rendus plus aisés.

Avantageusement, le matériau dudit piston étant un thermoplastique choisi dans la liste définie par les polypropylènes, les polyamides, les polyfluorures de vinylidène, le piston étant préférentiellement surmoulé sur une accroche d'un dispositif d'aspiration.

Avantageusement, le piston 1 est muni au niveau de sa couronne supérieure 23 et au niveau de sa base inférieure 27 de moyens d'étanchéité démontables. De cette façon, la maintenance est aisée puisqu'il n'est pas nécessaire de changer le piston en entier quand les moyens d'étanchéité sont usés. De cette façon, il est également possible d'inverser le montage desdits moyens d'étanchéité lorsqu'on souhaite inverser le fonctionnement de la machine hydraulique.

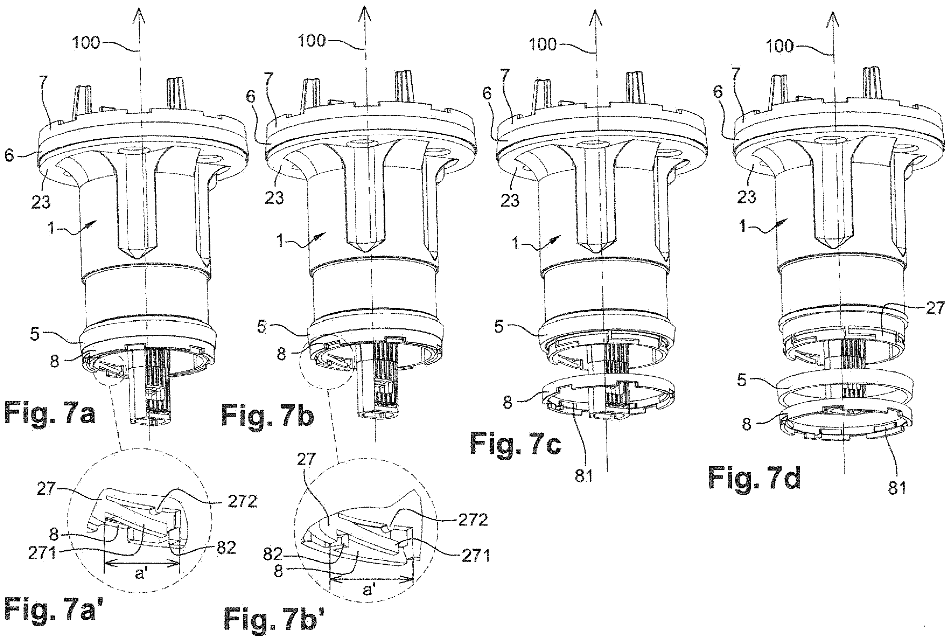

Tels que représenté sur les figures 7a, 7a', 7b, 7b', 7c, 7d et 8a, 8a', 8b, 8b', 8c, 8d, les moyens d'étanchéité de la couronne supérieure 23, respectivement de la base inférieure comprennent une lèvre 5, 6 et un adaptateur 7, 8 respectivement montée et fixé sur la surface circonférentielle de la couronne et de la base, la lèvre étant bloquée en translation entre un épaulement ménagé sur la surface circonférentielle de la couronne supérieure 23, respectivement de la base inférieure 27 et l'adaptateur.

Selon un agencement privilégié représenté en figures 7a, 7b, 7c, 7d, la fixation de l'adaptateur 8 comprend un assemblage du type « baïonnette » faisant coopérer des saillies radiales 81 ménagées sur la surface circonférentielle intérieure de l'adaptateur 8 avec des rainures périphériques correspondantes ménagées sur la surface circonférentielle extérieure de la base inférieure 27. Plus précisément, les saillies sont propres à coopérer avec des rainures périphériques correspondantes prévues sur la surface externe de la base inférieure 27. Des dégagements à génératrices parallèles à l'axe 100 de la machine hydraulique sont prévus sur la périphérie extérieure de la base 27 pour permettre d'amener les saillies radiales en face de l'entrée des rainures périphériques par un mouvement de translation parallèle à l'axe du piston. Puis, par une rotation autour de cet axe du piston, les saillies 81 sont engagées dans les rainures avec blocage de l'adaptateur 8. Le démontage des bagues s'effectue rapidement par un mouvement inverse.

La lèvre d'étanchéité 5 est ainsi bloquée entre un épaulement faisant saillie sur la surface circonférentielle extérieure de la base 27 du piston 1 et l'adaptateur 8.

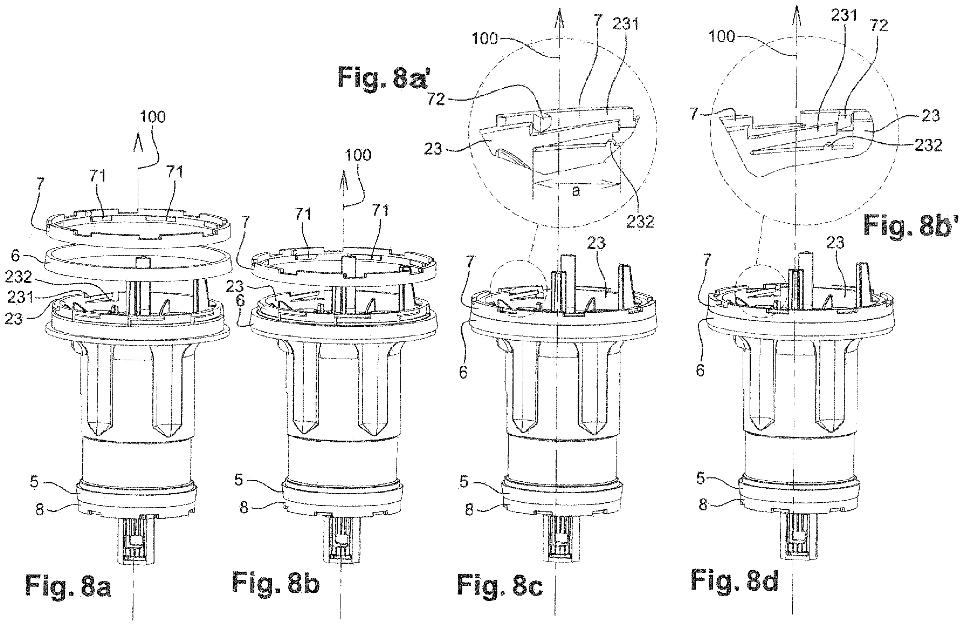

De même, selon un agencement privilégié représenté en figures 8a, 8b, 8c, 8d, la fixation de l'adaptateur 7 comprend un assemblage du type « baïonnette » faisant coopérer des saillies radiales 71 ménagées sur la surface circonférentielle intérieure de l'adaptateur 7 avec des rainures périphériques correspondantes ménagées sur la surface circonférentielle extérieure de la couronne supérieure 23. Plus précisément, les saillies sont propres à coopérer avec des rainures périphériques correspondantes prévues sur la surface externe de la couronne supérieure 23. Des dégagements à génératrices parallèles à l'axe du piston sont prévus sur la périphérie extérieure de la couronne 23 pour permettre d'amener les saillies radiales en face de l'entrée des rainures périphériques par un mouvement de translation parallèle à l'axe du piston. Puis, par une rotation autour de cet axe du piston, les saillies 71 sont engagées dans les rainures avec blocage de l'adaptateur 7. Le démontage des bagues s'effectue rapidement par un mouvement inverse.

La lèvre d'étanchéité 6 est ainsi bloquée entre un épaulement faisant saillie sur la surface circonférentielle extérieure de la couronne supérieure 23 du piston 1 et l'adaptateur 7.

Avantageusement, la fixation de type « baïonnette » des adaptateurs 7, 8 comprend en outre un dispositif de verrouillage visant à empêcher une désolidarisation fortuite entre l'adaptateur et son support. En d'autres termes, ce dispositif de verrouillage permet d'éviter que l'adaptateur ne tourne, provoquant ainsi le désengagement des nervures hors des rainures.

Tel que représenté sur les figures 7a' et 7b', le dispositif de verrouillage fait coopérer une languette 271 s'étendant suivant la largeur d'une fenêtre pratiquée dans l'épaisseur de la base inférieure 27 avec un ergot 82 s'étendant radialement depuis la surface circonférentielle intérieure de l'adaptateur 8, de sorte que, lors de l'assemblage de type baïonnette (en figure 7b') occasionné par une rotation selon l'axe 100 de l'adaptateur 8 par rapport à la base inférieure 27, l'ergot translate le long de la languette en occasionnant son fléchissement jusqu'à s'encastrer entre le bord de la fenêtre et l'extrémité de la languette libérée de l'appui de l'ergot (cf figure 7a'). L'ergot parcourt ainsi une distance a'.

Avantageusement, lors de son fléchissement, la languette 271 arrive en butée contre une protubérance 272 ménagée sur le bord de la fenêtre de la base inférieure 27. De cette façon, cette protubérance forme une butée limitant le fléchissement de la languette 271. De cette façon encore, l'ergot 82 ne peut retourner en arrière car il se retrouve également en butée contre la languette.

De même et tel que représenté sur les figures 8a' et 8b', le dispositif de verrouillage fait coopérer une languette 231 s'étendant suivant la largeur d'une fenêtre pratiquée dans l'épaisseur de la couronne supérieure 23 avec un ergot 72 s'étendant radialement depuis la surface circonférentielle intérieure de l'adaptateur 7, de sorte que lors de l'assemblage de type baïonnette (en figure 8b') occasionné par une rotation selon l'axe 100 de l'adaptateur 7 par rapport à la couronne supérieure 23, l'ergot translate le long de la languette en occasionnant son fléchissement jusqu'à s'encastrer entre le bord de la fenêtre et l'extrémité de la languette libérée de l'appui de l'ergot (cf figure 8a'). L'ergot parcourt ainsi une distance a.

Avantageusement, lors de son fléchissement, la languette 231 arrive en butée contre une protubérance 232 ménagée sur le bord de la fenêtre de la couronne supérieure 23. De cette façon, l'ergot 72 ne peut retourner en arrière car il se retrouve également en butée contre la languette.

Avantageusement, les lèvres 5 présentent un profil à tout le moins tronconique sur leur surface circonférentielle extérieure. Avantageusement, le profil des lèvres peut être en V.

Dans le cas du mode de fonctionnement dans lequel le mélange effectué entre le liquide principal et l'additif est évacué hors de la pompe sans traverser les chambres supérieure 16 puis inférieure 17, la pompe doseuse réversible est telle que le clapet supérieur est situé dans la chambre inférieure tandis que le clapet inférieur est situé dans la chambre supérieure.

De manière préférée, la base inférieure et la couronne supérieure sont équipées de lèvres d'étanchéité à profil en V, telles que la conicité de la lèvre de la couronne supérieure est tournée vers le haut tandis que la conicité de la lèvre de la base inférieure est tournée vers le bas. Pour plus de détail concernant le profil en V de ces lèvres d'étanchéité, on se référera au document FR2896280A1 et notamment à la figure 10.

Dans le cas du mode de fonctionnement dans lequel le mélange effectué entre le liquide principal et l'additif est évacué hors de la pompe après avoir traversé les chambres supérieure 16 puis inférieure 17, la pompe doseuse réversible est telle que le clapet supérieur est situé dans la chambre supérieure tandis que le clapet inférieur est situé dans la chambre de mélange.

De manière préférée, la base inférieure et la couronne supérieure sont équipées de lèvres d'étanchéité à profil en V, telles que la conicité de la lèvre de la couronne supérieure est tournée vers le bas tandis que la conicité de la lèvre de la base inférieure est tournée vers le haut. Pour plus de détail concernant le profil en V de ces lèvres d'étanchéité, on se référera au document FR2896280A1 et notamment à la figure 10.

En résumé, il apparaît que la particularité des sièges de clapets à double conicité, combinée au caractère démontable des lèvres, permet d'obtenir une pompe dont le fonctionnement est réversible. Le fait de pouvoir intervertir selon le besoin l'entrée et la sortie, permet une utilisation optimale de la pompe, puisque cette utilisation est adaptée à l'additif. Le caractère réversible permet également de proposer des options différentes avec très peu de pièces spécifiques, à savoir les clapets seulement.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Machine hydraulique, comprenant :
- une enveloppe (14) s'étendant longitudinalement suivant un axe (100), et renfermant un logement cylindrique (22) coaxial à l'enveloppe,
- un piston différentiel (1) présentant une couronne supérieure (23) ainsi qu'une base inférieure (27) de plus petite section, propres à coulisser chacune en mouvement alternatif respectivement dans l'enveloppe et dans le logement cylindrique, le piston et le logement cylindrique compartimentant l'intérieur de l'enveloppe suivant une chambre de mélange (18) délimitée par le logement cylindrique et la base inférieure du piston, une chambre dite « supérieure » (16) délimitée par la couronne supérieure (23) et un couvercle (15) de l'enveloppe, et une chambre dite « inférieure » (17) délimitée par la partie en deçà de la couronne supérieure, par l'enveloppe (14) et par le logement cylindrique,
- des moyens de commutation hydraulique pour l'alimentation et l'évacuation des chambres séparées par le piston, ces moyens de commutation étant commandés par les déplacements du piston et comportent au moins une bielle (4) agissant sur un organe de distribution (12) pouvant prendre deux positions stables, ledit organe de distribution comportant un clapet supérieur (3) coopérant avec un premier siège (25) pratiqué dans la couronne supérieure (23) du piston pour permettre la communication entre la chambre supérieure et la chambre inférieure et au moins un clapet inférieur (9) coopérant avec un second siège (26) pratiqué dans la base inférieure (27) du piston pour permettre la communication entre la chambre supérieure et la chambre de mélange,
- des moyens de déclenchement comprenant un poussoir (2) propres à provoquer, en fin de course du piston, un changement brusque de la position des moyens de commutation, sous l'action d'un moyen élastique (E), pour l'inversion de la course,
**caractérisée en ce que** les sièges de clapet inférieur et supérieur admettent respectivement chacun une portion tronconique supérieure (25a; 26a) et une portion tronconique inférieure (25c; 26c) de conicité opposée entre elles et s'ouvrant chacune dans l'une des chambres en communication, de sorte que la communication entre les chambres est coupée lorsque le clapet associé obture l'une ou l'autre des portions tronconiques supérieure ou inférieure.

2. Machine hydraulique selon la revendication 1, **caractérisée en ce que** le piston (1) est muni au niveau de sa couronne supérieure (23) et de sa base inférieure (27) de moyens d'étanchéité (5, 8; 6, 7) démontables.

3. Machine hydraulique selon la revendication 2, **caractérisée en ce qu'**au moins l'un des moyens d'étanchéité de la couronne supérieure et de la base inférieure comprend une lèvre (5, 6) et un adaptateur (7, 8) montés et fixés sur la surface circonférentielle de la couronne et/ou de la base du piston, la lèvre étant bloquée en translation entre un épaulement ménagé sur la surface circonférentielle de la couronne ou de la base correspondante, et l'adaptateur.

4. Machine hydraulique selon la revendication 3, **caractérisée en ce que** la fixation de l'adaptateur comprend un assemblage du type « baïonnette » faisant coopérer des saillies radiales (71, 81) ménagées sur la surface circonférentielle intérieure de l'adaptateur avec des rainures périphériques correspondantes ménagées sur la surface circonférentielle extérieure de la couronne ou de la base correspondante.

5. Machine hydraulique selon la revendication 3 ou 4, **caractérisée en ce que** la fixation de l'adaptateur comprend un verrouillage faisant coopérer une languette s'étendant suivant la largeur d'une fenêtre pratiquée dans l'épaisseur de la couronne, de la base correspondante, avec un ergot s'étendant radialement depuis la surface circonférentielle intérieure de l'adaptateur, de sorte que lors de l'assemblage de type « baïonnette », l'ergot translate le long de la languette en occasionnant son fléchissement jusqu'à s'encastrer entre le bord de la fenêtre et l'extrémité de la languette libérée de l'appui de l'ergot.

6. Machine hydraulique selon l'une quelconque des revendications précédentes 3 à 5, **caractérisée en ce que** la surface circonférentielle extérieure des lèvres est tronconique, les lèvres ayant préférentiellement un profil en coupe en forme de V.

7. Machine hydraulique selon l'une quelconque des revendications précédentes, **caractérisée en ce que** le piston est moulé d'une seule pièce, le matériau dudit piston étant un thermoplastique choisi dans la liste définie par les polypropylènes, les polyamides, les polyfluorures de vinylidène.

8. Machine hydraulique selon la revendication précédente, **caractérisée en ce que** le piston est surmoulé sur une accroche d'un dispositif d'aspiration (29).

9. Pompe doseuse réversible comprenant une machine hydraulique conforme à l'une quelconque des revendications précédentes, la pompe étant dotée d'un dispositif d'aspiration (29), d'une première tubulure (19) débouchant dans la chambre inférieure (17), d'une seconde (21) tubulure débouchant dans la chambre de mélange (18), et d'un manchon cylindrique (20) coaxial à l'enveloppe (14) s'étendant depuis la chambre de mélange vers l'extérieur pour permettre le raccordement au dispositif d'aspiration (29).

10. Pompe doseuse réversible selon la revendication 9, le clapet supérieur (3) étant situé dans la chambre inférieure (17) tandis que le clapet inférieur (9) est situé dans la chambre supérieure (16), la base inférieure (27) et la couronne supérieure (23) étant équipées de lèvres d'étanchéité (5, 6), dont la surface circonférentielle extérieure est tronconique, les lèvres ayant préférentiellement un profil en V, **caractérisée en ce que** la conicité de la lèvre (6) de la couronne supérieure (23) est tournée vers le couvercle tandis que la conicité de la lèvre (5) de la base inférieure (27) est tournée vers le dispositif d'aspiration.

11. Pompe doseuse réversible selon la revendication 9, le clapet supérieur (3) étant situé dans la chambre supérieure (16) tandis que le clapet inférieur (9) est situé dans la chambre de mélange (18), la base inférieure (27) et la couronne supérieure (23) étant équipées de lèvres d'étanchéité (5, 6) dont la surface circonférentielle extérieure est tronconique, les lèvres ayant préférentiellement un profil en V, **caractérisée en ce que** la conicité de la lèvre (6) de la couronne supérieure (23) est tournée vers le dispositif d'aspiration tandis que la conicité de la lèvre (5) de la base inférieure (27) est tournée vers le couvercle.

## Patentansprüche

1. Hydraulische Maschine, umfassend:
- eine Hülle (14), die sich in Längsrichtung entlang einer Achse (100) erstreckt und ein zylindrisches Gehäuse (22) umschließt, das koaxial in Bezug auf die Hülle ist;
- einen Stufenkolben (1), der ein oberes Kopfteil (23) sowie eine untere Basis (27) mit kleinerem Querschnitt aufweist, die jeweils in der Hülle bzw. in dem zylindrischen Gehäuse hin- und hergleiten können, wobei der Kolben und das zylindrische Gehäuse das Innere der Hülle in eine Mischkammer (18), die durch das zylindrische Gehäuse und die untere Basis des Kolbens abgegrenzt ist, eine sogenannte "obere" Kammer (16), die durch das obere Kopfteil (23) und einen Deckel (15) der Hülle abgegrenzt ist, und eine sogenannte "untere" Kammer (17), die durch das Teil unterhalb des oberen Kopfteils, durch die Hülle (14) und durch das zylindrische Gehäuse abgegrenzt ist, aufteilen;
- Mittel zur hydraulischen Umschaltung zur Beschickung und Entleerung der durch den Kolben getrennten Kammern, wobei diese Mittel zur Umschaltung durch die Verschiebungen des Kolbens gesteuert werden und wenigstens eine Pleuelstange (4) umfassen, die auf ein Verteilungselement (12) wirkt, das zwei stabile Positionen einnehmen kann, wobei das Verteilungselement ein oberes Ventil (3), das mit einem ersten Sitz (25) zusammenwirkt, der in dem oberen Kopfteil (23) des Kolbens angeordnet ist, um die Kommunikation zwischen der oberen Kammer und der unteren Kammer zu ermöglichen, und wenigstens ein unteres Ventil (9), das mit einem zweiten Sitz (26) zusammenwirkt, der in der unteren Basis (27) des Kolbens angeordnet ist, um die Kommunikation zwischen der oberen Kammer und der Mischkammer zu ermöglichen, umfasst;
- Mittel zur Auslösung, die einen Stößel (2) umfassen und am Ende der Bewegung des Kolbens einen plötzlichen Wechsel der Position der Mittel zur Umschaltung unter der Wirkung eines elastischen Mittels (E) für die Umkehr der Bewegung hervorrufen können;
**dadurch gekennzeichnet, dass** die Sitze des unteren und des oberen Ventils jeweils einen oberen Kegelstumpfteil (25a; 26a) und einen unteren Kegelstumpfteil (25c; 26c) mit entgegengesetzter Konizität zwischen sich zulassen, die sich jeweils in einer der Kommunikationskammern öffnen, so dass die Kommunikation zwischen den Kammern abgeschnitten ist, wenn das zugehörige Ventil das eine oder das andere des oberen oder unteren Kegelstumpfteils verschließt.

2. Hydraulische Maschine gemäß Anspruch 1, **dadurch gekennzeichnet, dass** der Kolben (1) an seinem oberen Kopfteil (23) und seiner unteren Basis (27) mit abnehmbaren Dichtungen (5, 8; 6, 7) versehen ist.

3. Hydraulische Maschine gemäß Anspruch 2, **dadurch gekennzeichnet, dass** wenigstens eine der Dichtungen des oberen Kopfteils und der unteren Basis eine Lippe (5, 6) und einen Adapter (7, 8) umfasst, die auf der Umfangsfläche des Kopfteils und/oder der Basis des Kolbens montiert und fixiert sind, wobei die Lippe bezüglich einer Verschiebung zwischen einer Schulter, die auf der Umfangsfläche des Kopfteils oder der entsprechenden Basis ausgebildet ist, und dem Adapter blockiert ist.

4. Hydraulische Maschine gemäß Anspruch 3, **dadurch gekennzeichnet, dass** die Fixierung des Adapters einen Bajonettverschluss umfasst, der radiale Vorsprünge (71, 81), die auf der inneren Umfangsfläche des Adapters ausgebildet sind, mit entsprechenden peripheren Vertiefungen, die auf der äußeren Umfangsfläche des Kopfteils oder der entsprechenden Basis ausgebildet sind, zusammenwirken lässt.

5. Hydraulische Maschine gemäß Anspruch 3 oder 4, **dadurch gekennzeichnet, dass** die Fixierung des Adapters eine Verriegelung umfasst, die eine Lasche, welche sich gemäß der Breite eines in der Dicke des Kopfteils ausgeführten Fensters von der entsprechenden Basis weg erstreckt, mit einem Sporn, der sich radial ausgehend von der inneren Umfangsfläche des Adapters erstreckt, zusammenwirken lässt, so dass bei dem Bajonettverschluss sich der Sporn entlang der Lasche verschiebt, indem er deren Einbruch verursacht, bis sie sich zwischen dem Rand des Fensters und dem Ende der Lasche, das vom Druck des Sporns befreit ist, einbettet.

6. Hydraulische Maschine gemäß einem der vorstehenden Ansprüche 3 bis 5, **dadurch gekennzeichnet, dass** die äußere Umfangsfläche der Lippen kegelstumpfförmig ist, wobei die Lippen vorzugsweise ein Querschnittsprofil in V-Form aufweisen.

7. Hydraulische Maschine gemäß einem der vorstehenden Ansprüche, **dadurch gekennzeichnet, dass** der Kolben einstückig geformt ist, wobei das Material des Kolbens ein Thermoplast ist, der aus der Gruppe ausgewählt ist, die aus Polypropylenen, Polyamiden, Polyvinylidenfluoriden besteht.

8. Hydraulische Maschine gemäß dem vorstehenden Anspruch, **dadurch gekennzeichnet, dass** der Kolben über einem Haken einer Saugvorrichtung (29) überformt ist.

9. Reversible Dosierpumpe, die eine hydraulische Maschine gemäß einem der vorstehenden Ansprüche umfasst, wobei die Pumpe über eine Saugvorrichtung (29), eine erste Leitung (19), die in die untere Kammer (17) mündet, eine zweite Leitung (21), die in die Mischkammer (18) mündet, und eine zylindrische Muffe (20) verfügt, die koaxial zur Hülle (14) ist und sich von der Mischkammer aus nach außen erstreckt, um den Anschluss an die Saugvorrichtung (29) zu ermöglichen.

10. Reversible Dosierpumpe gemäß Anspruch 9, wobei sich das obere Ventil (3) in der unteren Kammer (17) befindet, während sich das untere Ventil (9) in der oberen Kammer (16) befindet, wobei die untere Basis (27) und das obere Kopfteil (23) mit Dichtungslippen (5, 6) ausgestattet sind, deren äußere Umfangsfläche kegelstumpfförmig ist, wobei die Lippen vorzugsweise ein V-Profil aufweisen, **dadurch gekennzeichnet, dass** die Konizität der Lippe (6) des oberen Kopfteils (23) auf den Deckel hin gerichtet ist, während die Konizität der Lippe (5) der unteren Basis (27) auf die Saugvorrichtung hin gerichtet ist.

11. Reversible Dosierpumpe gemäß Anspruch 9, wobei sich das obere Ventil (3) in der oberen Kammer (16) befindet, während sich das untere Ventil (9) in der Mischkammer (18) befindet, wobei die untere Basis (27) und das obere Kopfteil (23) mit Dichtungslippen (5, 6) ausgestattet sind, deren äußere Umfangsfläche kegelstumpfförmig ist, wobei die Lippen vorzugsweise ein V-Profil aufweisen, **dadurch gekennzeichnet, dass** die Konizität der Lippe (6) des oberen Kopfteils (23) auf die Saugvorrichtung hin gerichtet ist, während die Konizität der Lippe (5) der unteren Basis (27) auf den Deckel hin gerichtet ist.

## Claims

1. A hydraulic machine, comprising:
- a casing (14) that extends longitudinally along an axis (100), and enclosing a cylindrical housing (22) coaxial to the casing,
- a differential piston (1) having an upper ring (23) and a lower base (27) of a smaller cross-section, each suitable for sliding in reciprocating movement respectively in the casing and in the cylindrical housing, the piston and the cylindrical housing separating the interior of the casing according to a mixing chamber (18) delimited by the cylindrical housing and the lower base of the piston, a chamber (16) called "upper chamber" delimited by the upper ring (23) and a cover (15) of the casing, and a chamber (17) called "lower chamber" delimited by the portion below the upper ring, the casing (14) and the cylindrical housing,
- hydraulic switching means for supplying and discharging the chambers separated by the piston, these switching means being controlled by the movements of the piston and including at least one rod (4) acting on a distribution member (12) able to adopt two stable positions, said distribution member including an upper valve (3) cooperating with a first seat (25) made in the upper ring (23) of the piston so as to allow communication between the upper chamber and the lower chamber and at least one lower valve (9) cooperating with a second seat (26) made in the lower base (27) of the piston so as to allow communication between the upper chamber and the mixing chamber,
- triggering means comprising a push-piece (2) suitable for causing, at the end of the stroke of the piston, a sudden change in the position of the switching means, under the action of an elastic means (E), to reverse the stroke,
**characterized in that** the lower and upper valve seats respectively accept an upper frustoconical portion (25a; 26a) and a lower frustoconical portion (25c; 26c) tapering in opposite directions and each opening into one of the communicating chambers, such that the communication between the chambers is cut off when the associated valve closes off either one of the upper or lower frustoconical portions.

2. The hydraulic machine as claimed in claim 1, **characterized in that** the piston (1) is equipped at its upper ring (23) and at its lower base (27) with removable sealing means (5, 8; 6, 7).

3. The hydraulic machine as claimed in claim 2, **characterized in that** at least one of the sealing means of the upper ring and of the lower base comprises a lip (5, 6) and an adapter (7, 8) assembled and fastened on the circumferential surface of the ring and/or of the base of the piston, the lip being blocked in translation between a shoulder, disposed on the circumferential surface of the upper ring or of the corresponding lower base, and the adapter.

4. The hydraulic machine as claimed in claim 3, **characterized in that** the fastening of the adapter comprises a "bayonet" type assembly making radial protrusions (71, 81), disposed on the inner circumferential surface of the adapter, cooperate with corresponding peripheral grooves disposed on the outer circumferential surface of the upper ring or of the corresponding base.

5. The hydraulic machine as claimed in claim 3 or 4, **characterized in that** the fastening of the adapter comprises a lock making a strip, extending along the width of a window made in the thickness of the upper ring, of the corresponding base, cooperate with a lug that extends radially from the inner circumferential surface of the adapter, such that during assembling of the "bayonet" type, the lug translates along the strip causing it to flex until it is embedded between the edge of the window and the end of the strip released from the support of the lug.

6. The hydraulic machine as claimed in any one of the preceding claims 3 to 5, **characterized in that** the outer circumferential surface of the lips is frustoconical, the lips preferably having a V shaped profile in section.

7. The hydraulic machine as claimed in any one of the preceding claims, **characterized in that** the piston is molded in a single piece, the material of said piston being a thermoplastic chosen from the list defined by the polypropylenes, the polyamides, the polyvinylidene fluorides.

8. The hydraulic machine as claimed in the preceding claim, **characterized in that** the piston is overmolded on an adhesion aid of a suction device (29).

9. A reversible metering pump comprising a hydraulic machine according to any one of the preceding claims, the pump being endowed with a suction device (29), a first pipe (19) leading into the lower chamber (17), a second pipe (21) leading into the mixing chamber (18), and a cylindrical sleeve (20) coaxial to the casing (14) that extends from the mixing chamber to the exterior so as to allow connection to the suction device (29).

10. A reversible metering pump as claimed in claim 9, the upper valve (3) being situated in the lower chamber (17), whereas the lower valve (9) is situated in the upper chamber (16), the lower base (27) and the upper ring (23) being equipped with sealing lips (5,6) whose outer circumferential surface is frustoconical, the lips preferably having a V shaped profile, **characterized in that** the taper of the lip (6) of the upper ring (23) is turned towards the cover, whereas the taper of the lip (5) of the lower base (27) is turned towards the suction device.

11. A reversible metering pump as claimed in claim 9, the upper valve (3) being situated in the upper chamber (16), whereas the lower valve (9) is situated in the mixing chamber (18), the lower base (27) and the upper ring (23) each being equipped with sealing lips (5,6) whose outer circumferential surface is frustoconical, the lips preferably having a V shaped profile, **characterized in that** the taper of the lip (6) of the upper ring (23) is turned towards the suction device, whereas the taper of the lip (5) of the lower base (27) is turned towards the cover.
